**Europäisches Patentamt**

**European Patent Office**

**Office européen des brevets**

(19)

(11) Veröffentlichungsnummer : **0 372 026 B1**

(12) # EUROPÄISCHE PATENTSCHRIFT

(45) Veröffentlichungstag der Patentschrift :
26.08.92 Patentblatt 92/35

(51) Int. Cl.$^5$ : **A01G 3/06**

(21) Anmeldenummer : **89904065.3**

(22) Anmeldetag : **12.04.89**

(86) Internationale Anmeldenummer :
**PCT/EP89/00392**

(87) Internationale Veröffentlichungsnummer :
**WO 89/10682 16.11.89 Gazette 89/27**

(54) **MOTORBETRIEBENE GRASSCHERE.**

(30) Priorität : **07.05.88 DE 3815651**

(43) Veröffentlichungstag der Anmeldung :
**13.06.90 Patentblatt 90/24**

(45) Bekanntmachung des Hinweises auf die
Patenterteilung :
**26.08.92 Patentblatt 92/35**

(84) Benannte Vertragsstaaten :
**CH DE FR GB LI**

(56) Entgegenhaltungen :
**EP-A- 083 492**
**EP-A- 176 210**
**WO-A-85/02950**
**DE-A- 2 718 354**
**FR-A- 2 282 324**
**GB-A- 1 075 857**

(73) Patentinhaber : **SCINTILLA AG**
**Postfach 632**
**CH-4501 Solothurn (CH)**

(72) Erfinder : **LINDER, Walter**
**Sumpfstr. 196**
**CH-4554 Etziken (CH)**
Erfinder : **RUEPP, Urs**
**Duerrbachstr. 53**
**CH-4500 Solothurn (CH)**

(74) Vertreter : **Voss, Klaus, Dipl.-Ing. et al**
**Robert-Bosch-Platz 1**
**W-7016 Gerlingen-Schillerhöhe (DE)**

## Beschreibung

### Stand der Technik

Die Erfindung geht aus von einer Grasschere nach der Gattung des Anspruchs 1. Aus der FR-A 22 82 324 ist bereits eine elektrisch betriebene Grasschere bekannt, die zum Aufladen abnehmbare Batterien mit zwei von außen nicht zugänglichen elektrischen Anschlüssen aufweist, die mit einem üblichen Ladegerät verbindbar sind. Die länge Ladezeit, die mit solchen Ladegeräten benötigt wird, ist für den Anwender dann ärgerlich, wenn nur noch ein kurzes Stück Rasen oder dergleichen zu schneiden ist, nachdem sich der Akku entleert hat. Er kann seine Gartenarbeit dann erst nach längerer Ladezeit, z.B. am nächsten Tag, vollenden. Weiter ist aus der US 3 999 110 ein schnelladbares batteriebetriebenes Elektrowerkzeug bekannt, dessen Akkus jedoch nur in ausgebautem Zustand aufgeladen werden können.

### Vorteile der Erfindung

Die erfindungsgemäße Grasschere mit den kennzeichnenden Merkmalen des Anspruchs 1 hat demgegenüber den Vorteil, daß ihre Einsatzmöglichkeiten erweitert werden und die zeitliche Verfügbarkeit erhöht wird. Der Akkumulator der Grasschere kann bei Bedarf in kurzer Zeit schnell geladen werden, so daß die Schere bereits nach einer Stunde wieder voll einsatzbereit ist. Zum Schutz des Akkumulators ist neben dem Plus- und dem Minuskontakt ein dritter Kontakt zur Überwachung der Temperatur vorgesehen. Im Normalfall, wenn die Kapazität des Akkumulators für die Gartenarbeiten ausreicht, wird dieser mit einem preisgünstigen Dauerladegerät schonend längsam geladen, wozu der Akkumulator nicht aus dem Gerät herausgenommen zu werden braucht.

Durch die in den Unteransprüchen aufgeführten Maßnahmen sind vorteilhafte Weiterbildungen und Verbesserungen der im Anspruch 1 angegebenen Grasschere möglich. Besonders vorteilhaft ist es, wenn der Akkumulator leicht aus der Grasschere entnommen werden kann. Er kann dann in ein eventuell bereits vorhandenes, auch für andere Akkumulatorgeräte verwendbares Schnelladegerät direkt eingesetzt werden. Außerdem erleichtert die Entnehmbarkeit die getrennte umweltfreundliche Entsorgung eines verbrauchten Akkumulators. Beim Anschluß des Kontaktes zur Temperaturüberwachung an eine Ladebuchse im Gehäuse braucht nur noch das gewünschte Ladegerät eingesteckt zu werden, um den Akkumulator entweder schnell oder langsam aufzuladen.

### Zeichnung

Ein Ausführungsbeispiel der Erfindung ist in der Zeichnnung dargestellt und in der nachfolgenden Beschreibung näher erläutert. Figur 1 zeigt einen Längsschnitt durch eine Grasschere, Figur 2 zeigt eine Draufsicht auf einen Akkumulator und Figur 3 eine Vorderansicht des Akkumulators.

### Beschreibung des Ausführungsbeispiels

Die Grasschere 1 hat zwei übereinanderliegende Schermesser 2, 3 die gegeneinander hin- und hergehend angetrieben sind von einem Elektromotor 4 mit Getriebe 5. Innerhalb des Gehäuses 6 der Grasschere, das eine Grifföffnung 7 aufweist, ist außerdem ein Schalter 8 und ein aufladbarer Akkumulator 10 untergebracht.

Der Akkumulator 10 ist in eine Gehäuseöffnung 11 einschiebbar, die mit einem Deckel 12 verschließbar ist. Der Deckel 12 weist eine elastische Zunge 13 auf, die zusammen mit einem Gehäusevorsprung 14 einen Schnappverschluß bildet.

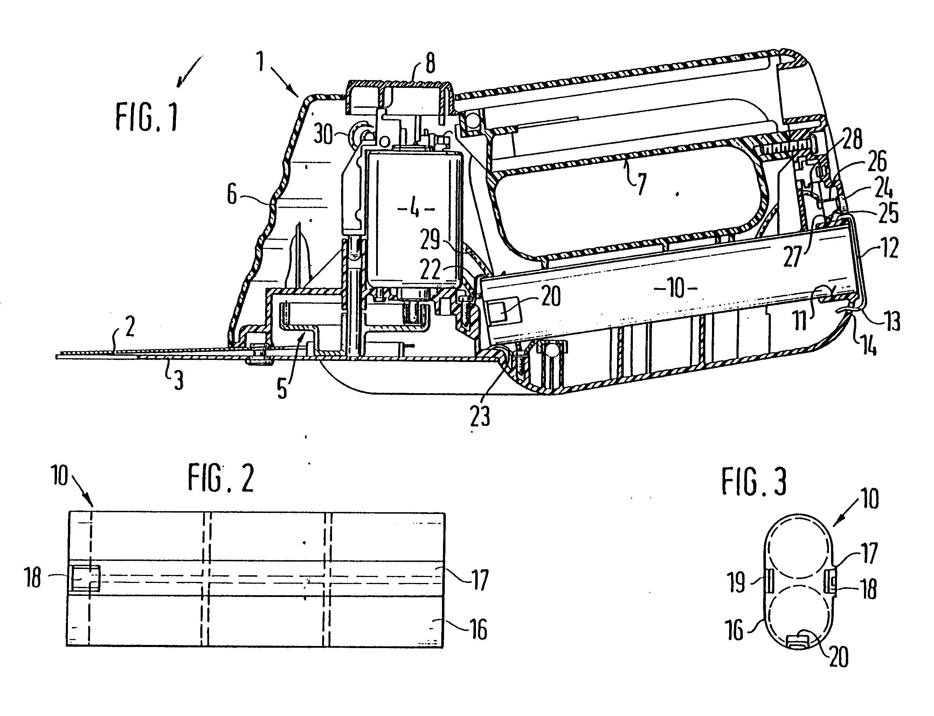

Der Akkumulator 10 setzt sich hier aus sechs Einzelzellen zusammen, von denen je drei hintereinander und zwei nebeneinander in einem Gehäuse 16 angeordnet sind (siehe Figur 2). Auf einer Breitseite des Gehäuses 16 erstreckt sich längs eine Rippe 17. An einem Ende des Akkumulators 10 sind drei elektrische Kontakte angeordnet: eine Minuskontaktlasche 18 im Bereich der Rippe 17, eine der Minuskontaktfahne 18 gegenüberliegende Pluskontaktfahne 19 und eine Kontaktfahne 20 zur Temperaturüberwachung an einer der Schmalseiten des Gehäuses 16 (siehe auch Figur 3). Zwischen dem Pluskontakt 19 und dem Temperaturkontakt 20 liegt ein nicht gezeigter temperaturabhängiger Widerstand, z.B. NTC-Widerstand, der dicht an einer der Akkumulatorzellen angeordnet ist und jeweils deren Temperatur annimmt.

Die Grasschere 1 weist in ihrem Inneren zwei Kontaktfedern 22, 23 auf, die bei eingeschobenem Akkumulator 10 an dessen Kontaktlaschen 18 und 19 anliegen. Auch für die Temperaturkontaktfahne 20 kann eine Kontaktfeder vorgesehen werden.

An der Rückseite des Gehäuses 6 weist die Grasschere 1 eine Ladebuchse 24 für einen handelsüblichen zweipoligen Klinkenstecker mit zwei Kontaktfahnen 25, 26 auf. Ein Kontakt der Ladebuchse ist über einen Stromleiter 27 mit der Kontaktfeder 23 und der andere über einen Stromleiter 28 mit der Kontaktfeder 22 verbunden. Die Kontaktfedern 22 und 23 sind ihrerseits wieder über Stromleiter 29, 30 mit dem Schalter 8 bzw. mit dem Motor 4 verbunden. Bei geschlossenem Schalter 8 wird der Strom von diesem an den Motor 4 weitergeleitet.

Zum langsamen Laden, das bei leerem Akkumulator 10 etwa zwölf Stunden erfordert, wird die Grasschere 1 entweder in einen nicht gezeigten mit Ladegerät und Klinkenstecker ausgerüsteten Wandhalter eingesetzt oder der Klinkenstecker eines Ladegeräts wird direkt in die Buchse 24 eingesteckt. Wegen des geringen Ladestroms von ca. 120 mA kann die Grasschere 1 beliebig lange an das Ladegerät angeschlossen bleiben.

Zum Schnelladen wird der Akkumulator 10 entweder aus dem Gerät entnommen und in ein nicht gezeigtes Schnelladegerät eingesteckt oder das Schnelladegerät wird über eine Steckverbindung an die Grasschere angeschlossen, so daß außer den Ladekontakten auch der Temperatur-Kontakt 20 des Akkumulators 10 Verbindung zum Ladegerät hat. Ein leerer Akkumulator 10 läßt sich so in ca. 1 Stunde wieder voll aufgeladen. Das Schnelladegerät verfügt über eine Schaltung, die den temperaturabhängigen Widerstand des NTC-Widerstandes mißt und den hohen Schnelladestrom nur bei Temperaturen zwischen 0 °C und 45 °C einschaltet, so daß die Akkumulatorzellen keinen Schaden nehmen können. Bei Über- oder Unterschreitung der zulässigen Temperatur oder bei vollgeladenem Akkumulator schaltet das Schnelladegerät auf einen geringen Dauerladestrom um, um eine Selbstentladung des Akkumulators zu verhindern.

Das Dauerladegerät oder das Schaelladegerät können auch direkt in das Gehäuse der Grasschere 1 eingebaut sein, so daß zum Aufladen des Akkumulators nur noch ein Netzanschlußkabel eingesteckt werden muß.

**Patentansprüche**

1. Grasschere (1) mit einem Gehäuse (6), mit hervorstehenden Schermessern (2, 3), von denen mindestens eines von einem Elektromotor (4) hin- und hergehend angetrieben ist, sowie mit einem entnehmbaren, aufladbarem Akkumulator (10), der mit elektrischen Anschlußkontakten (18, 19) versehen ist, an die ein Ladegerät anschließbar ist, dadurch gekennzeichnet, daß die Grasschere (1) einen schnelladbaren Akkumulator (10) enthält und daß dieser alternativ entweder über eine von außen zugängliche Ladebuchse (24) zum Anschluß eines Ladegeräts für normalen Langsam-Ladebetrieb aufladbar ist, oder über am Akkumulator (10) oder am Gehäuse (6) angeordnete Kontaktfahnen (18, 19, oder 25, 26) mittels eines Schnelladegeräts schnelladbar ist, wobei der Akkumulator (10) zusätzlich mit einer Kontaktfahne (20) für die Meßwertübertragung zum Überwachen des Schnelladevorgangs ausgerüstet ist.

2. Motorbetriebene Grasschere nach Anspruch 1, dadurch gekennzeichnet, daß zur Überwachung die Temperatur des Akkumulators (10) während des Ladens dient.

3. Motorbetriebene Grasschere nach Anspruch 1 oder 2, dadurch gekennzeichnet, daß die Kontaktfahne (20) an dem Gehäuse (6) der Grasschere (1) angeordnet ist.

4. Motorbetriebene Grasschere nach Ansptuch 1 oder 3, dadurch gekennzeichnet, daß die Ladebuchse (24) und/oder der Kontakt (20) im hinteren Teil des Gehäuses (6) und nahe der Außenkontur des Gehäuses (6) angeordnet ist, so daß ein z.B. fest in einem Wandhalter installierter Stecker eines Ladegeräts in die Buchse (24) einführbar ist.

5. Motorbetriebene Grasschere nach Anspruch 1 oder 2, dadurch gekennzeichnet, daß die Kontaktfahne (20) zur Ladeüberwachung an einem Gehäuse (16) angeordnet ist, das den Akkumulator (10) aufnimmt.

6. Motorbetriebene Grasschere nach Anspruch 5, dadurch gekennzeichnet, daß der Akkumulator (10) in einer Gehäuseöffnung (11) untergebracht ist, die mit einem Deckel (12) verschließbar ist.

7. Motorbetriebene Grasschere nach Anspruch 5, dadurch gekennzeichnet, daß an den Kontaktlaschen (18), (19) des Akkumulators (10) bei in die Grasschere (1) eingeschobenem Zustand Kontaktfedern (22), (23) anliegen, die sowohl mit der Ladebuchse (24) als auch mit dem Motor (4) bzw. einem Schalter (8) verbunden sind.

8. Motorbetriebene Grasschere nach Anspruch 1, dadurch gekennzeichnet, daß ein Ladegerät zur Dauerladung in die Grasschere (1) eingebaut ist.

**9.** Motorbetriebene Grasschere nach Anspruch 1, dadurch gekennzeichnet, daß ein Schnelladegerät in die Grasschere (1) eingebaut und an die drei Kontakte (18), (19) und (20) des Akkumulators (10) angeschlossen ist.

## Claims

**1.** Grass cutters (1) having a housing (6), having projecting cutter blades (2, 3), at least one of which is driven in a reciprocating manner by an electric motor (4), and having a removable, rechargable accumulator (10) which is provided with electrical connecting contacts (18, 19) to which a charging unit can be connected, characterised in that the grass cutters (1) contain a rapidly chargeable accumulator (10), and in that said accumulator (10) can alternatively either be charged via an externally accessible charging socket (24) for the connection of a charging unit for the normal, slow charging mode, or can be charged rapidly by means of a rapid charging unit, via contact tabs (18, 19 or 25, 26) arranged on the accumulator (10) or on the housing (6), the accumulator (10) additionally being equipped with a contact tab (20) for measured value transmission, for monitoring the rapid charging process.

**2.** Power-operated grass cutters according to Claim 1, characterised in that the temperature of the accumulator (10) during charging is used for monitoring.

**3.** Power-operated grass cutters according to Claim 1 or 2, characterised in that the contact tab (20) is arranged on the housing (6) of the grass cutters (1).

**4.** Power-operated grass cutters according to Claim 1 or 3, characterised in that the charging socket (24) and/or the contact (20) is arranged in the rear part of the housing (6) and close to the outer contour of the housing (6) such that a charging unit plug, which is installed, for example, fixedly in a wall holder, can be inserted in the socket (24).

**5.** Power-operated grass cutters according to Claim 1 or 2, characterised in that the contact tab (20) for charge monitoring is arranged on a housing (16) [sic] which holds the accumulator (10).

**6.** Power-operated grass cutters according to Claim 5, characterised in that the accumulator (10) is accommodated in a housing opening (11) which can be closed with a cover (12).

**7.** Power-operated grass cutters according to Claim 5, characterised in that contact springs (23), which are connected both to the charging socket (24) and to the motor (4) or to a switch (8), rest on the contact lugs (18), (19) of the accumulator (10) when pushed into the grass cutters (1).

**8.** Power-operated grass cutters according to Claim 1, characterised in that a charging unit for continuous charging is installed in the grass cutters (1).

**9.** Power-operated grass cutters according to Claim 1, characterised in that a rapid charging unit is installed in the grass cutters (1) and is connected to the three contacts (18), (19) and (20) of the accumulator (10).

## Revendications

1°) Ciseaux à gazon (1) composé d'un boîtier (6) portant des lames de couteau (2, 3) en saillie, dont au moins l'une est entraînée alternativement par un moteur électrique (4), ainsi qu'un accumulateur rechargeable (10), extractible, muni de contacts de branchement électriques (18, 19) permettant son branchement sur un chargeur, ciseaux à gazon (1) caractérisés en ce qu'ils comportent un accumulateur à recharge rapide (10) qui peut être rechargé soit par l'intermédiaire d'une douille de recharge (24), accessible de l'extérieur, pour brancher un chargeur pour la mise en charge lente, normale, soit par des fiches de contact (18, 19 ou 25, 26) prévues sur l'accumulateur (10) ou le boîtier (6), par l'intermédiaire d'un chargeur rapide permettant une recharge rapide, l'accumulateur (10) étant en outre équipé d'une fiche de contact (20) pour transmettre la valeur mesurée servant à contrôler l'opération de charge rapide.

2°) Ciseaux à gazon entraîné par moteur selon la revendication 1, caractérisés en ce que la surveillance est réalisée à partir de la température de l'accumulateur (10) pendant la phase de recharge.

3°) Ciseaux à gazon entraîné par moteur selon la revendication 1 ou 2, caractérisé en ce que les fiches de contact (20) sont prévues sur le boîtier (6) des ciseaux à gazon (1).

4°) Ciseaux à gazon entraînés par moteur selon la revendication 1 ou 3, caractérisés en ce que la douille de recharge (24) et/ou le contact (20) sont prévus dans la partie arrière et à proximité du contour extérieur du boîtier (6) de façon à permettre par exemple l'introduction d'une fiche solidaire d'un support mural appartenant à un chargeur, dans la douille (24).

5°) Ciseaux à gazon entraînés par moteur selon la revendication 1 ou 2, caractérisés en ce que la fiche de contact (20) est prévue sur un boîtier (16) pour contrôler la charge et qui reçoit l'accumulateur (10).

6°) Ciseaux à gazon entraînés par moteur selon la revendication 5, caractérisés en ce que l'accumulateur (10) est logé dans une ouverture (11) du boîtier qui se ferme avec un couvercle (12).

7°) Ciseaux à gazon entraînés par moteur selon la revendication 5, caractérisés en ce que des ressorts de contact (22, 23) s'appliquent contre les languettes de contact (18, 19) de l'accumulateur (10) lorsque celui-ci est glissé dans les ciseaux à gazon (1), ces ressorts étant reliés à la fois à la douille de recharge (24) et au moteur (4) ou à un interrupteur (8).

8°) Ciseaux à gazon entraînés par moteur selon la revendication 1, caractérisés par un chargeur de recharge permanente intégré aux ciseaux à gazon (1).

9°) Ciseaux à gaz entraînés par moteur selon la revendication 1, caractérisés par un chargeur rapide monté dans les ciseaux (1) et relié à trois contacts (18, 19, 20) de l'accumulateur (10).

FIG.1

FIG.2

FIG.3